# DEMANDE DE BREVET EUROPEEN

(11) **EP 4 446 083 A1**
(43) Date de publication de la demande: **16.10.2024**
(21) Numéro de dépôt: 24170374.3
(22) Date de dépôt: 15.04.2024
(51) Int. Cl.: B29C 39/42, B29C 39/24, B29C 39/44

(54) **PROCÉDÉ ET DISPOSITIF DE MOULAGE PAR INFUSION**

(30) Priorité: 13.04.2023 FR 2303689; 12.05.2023 FR 2304746
(71) Demandeur: Girgenti, Philippe, 26170 Mollans-sur-Ouvèze (FR)
(72) Inventeur: Girgenti, Philippe, 26170 Mollans-sur-Ouvèze (FR)
(74) Mandataire: Cornuejols, Marine Sophie

(57) **Abrégé**

Un procédé (10) de moulage par infusion de résine, qui comporte :
- une étape de mise sous vide (101) d'au moins une partie d'un moule,
- une étape d'aspiration (102) de la résine depuis un réservoir et de circulation de la résine dans ladite partie du moule, sous l'effet du vide,
- une étape de récupération (103) de la résine dans un moyen de stockage,
- une étape de détection (104) d'un niveau de remplissage dans le moyen de stockage,
- une étape de comparaison (105) du niveau de remplissage avec une valeur limite prédéterminée et
- une étape de vidange (107) du moyen de stockage lorsque le niveau de remplissage est supérieur à la valeur limite prédéterminée.

## Description

### DOMAINE TECHNIQUE DE L'INVENTION

La présente invention vise un procédé et un dispositif de moulage par infusion. Elle s'applique, notamment, à la création d'objets moulés en résine, par exemple des coques de piscine ou de navires.

### ÉTAT DE LA TECHNIQUE

Actuellement, les procédés d'infusion de résine par moulage sont réalisés par mise sous vide d'un moule, la mise sous vide aspirant la résine dans un réservoir et remplissant le moule. Cependant, il existe des risques que la résine atteigne la pompe à vide et l'endommage.

Certains dispositifs comportent un réservoir de stockage tampon entre le moule et la pompe à vide pour éviter qu'un éventuel débordement n'atteigne la pompe à vide. Cependant, si le réservoir tampon n'est pas surveillé par un opérateur, le risque d'endommagement est toujours présent.

On connait les documents EP 1 235 672A2, US 6 800 225 B1 et US 2003/010286 A1 qui divulguent des procédés de moulage par injection.

### RÉSUMÉ DE L'INVENTION

La présente invention vise à remédier à tout ou partie de ces inconvénients.

La présente invention permet de détecter que le réservoir tampon approche d'un remplissage et de le vider avant que la pompe à vide ne soit endommagée. De plus, en commutant entre différents réservoirs tampons, la présente invention permet de maintenir l'aspiration de manière continue. Enfin, la présente invention permet de récupérer la résine aspirée et de la réutiliser pour le moulage.

### EXPOSÉ DE L'INVENTION

Selon un premier aspect, la présente invention vise un procédé de moulage par infusion de résine, qui comporte :
- une étape de mise sous vide d'au moins une partie d'un moule,
- une étape d'aspiration de la résine depuis un réservoir et de circulation de la résine dans ladite partie du moule, sous l'effet du vide,
- une étape de récupération de la résine dans un moyen de stockage,
- une étape de détection d'un niveau de remplissage dans le moyen de stockage,
- une étape de comparaison du niveau de remplissage avec une valeur limite prédéterminée et
- une étape de vidange du moyen de stockage lorsque le niveau de remplissage est supérieur à la valeur limite prédéterminée.

Grâce à ces dispositions, la résine ne pénètre pas dans la pompe à vide, ce qui évite son endommagement.

Dans des modes de réalisation, l'étape de vidange comporte une étape de retour de la résine vidangée dans le réservoir.

Grâce à ces dispositions, la résine contenue dans le moyen de stockage est récupérée et réutilisée pour d'autres itérations du procédé de moulage.

Dans des modes de réalisation, l'étape de retour comporte une étape de pompage de la résine vidangée vers le réservoir.

Grâce à ces dispositions, la résine vidangée peut être plus rapidement acheminée vers le réservoir.

Dans des modes de réalisation, le procédé objet de la présente invention comporte, de plus, avant l'étape de vidange, une étape de commutation, lorsque le niveau de remplissage est supérieur à la valeur limite prédéterminée, d'un premier moyen de stockage avec un deuxième moyen de stockage, monté en parallèle, pour réaliser les étapes de récupération et vidange.

Grâce à ces dispositions, il est possible de commuter entre deux moyens de stockage sans interrompre l'aspiration.

Dans des modes de réalisation, le procédé objet de la présente invention comporte, de plus, une fois une première étape de vidange effectuée, au moins une deuxième étape de vidange du moyen de stockage dont le niveau de remplissage est le plus élevé.

Grâce à ces dispositions, un réservoir est toujours vidangé, ce qui permet d'augmenter l'efficacité du dispositif.

Dans des modes de réalisation, le procédé objet de la présente invention comporte une étape de commande d'une étape de vidange d'au moins un moyen de stockage en fonction d'au moins une règle de priorité.

Grâce à ces dispositions, une fois la première vidange effectuée, on limite le remplissage des autres réservoirs pour éviter une situation dans laquelle plusieurs réservoirs doivent être vidangés simultanément.

Dans des modes de réalisation, l'étape de vidange est mise en oeuvre pour un seul moyen de stockage à la fois.

Grâce à ces dispositions, l'aspiration est effectuée en continu dans le moule.

Dans des modes de réalisation, le procédé objet de la présente invention comporte, de plus, une étape d'arrêt d'urgence lorsque le niveau de remplissage est supérieur à la valeur limite prédéterminée pour chaque moyen de stockage.

Grâce à ces dispositions, en cas d'empêchement de la vidange, par bouchage d'une canalisation de vidange, par exemple, le procédé peut être arrêté automatiquement pour éviter d'endommager la pompe à vide.

Dans des modes de réalisation, l'étape de détection du niveau de remplissage comporte une étape de mesure de la masse du moyen de stockage, la valeur limite prédéterminée étant une valeur représentative d'une masse.

Grâce à ces dispositions, un moyen de mesure de masse peut être disposé sous chaque moyen de stockage, pour détecter l'approche d'une commutation, par exemple.

Dans des modes de réalisation, l'étape de commutation est effectuée proportionnellement à la masse détectée dans le premier moyen de stockage.

Grâce à ces dispositions, à partir d'une certaine valeur de masse, un deuxième moyen de stockage peut commencer son remplissage alors que le premier est rempli avec un débit de moins en moins important.

Dans des modes de réalisation, le procédé objet de la présente invention comporte une étape de purification de la résine vidangée.

Grâce à ces dispositions, des impuretés peuvent être enlevées de la résine afin d'obtenir un moulage homogène et limiter les défauts de fabrication.

Selon un deuxième aspect, la présente invention vise un dispositif de moulage par infusion de résine, qui comporte :
- un moyen de mise sous vide d'au moins une partie d'un moule,
- un réservoir de résine,
- un moyen d'aspiration de la résine depuis le réservoir et de circulation de la résine dans ladite partie du moule, sous l'effet du vide,
- un moyen de stockage de récupération de la résine,
- un moyen de détection d'un niveau de remplissage dans le moyen de stockage,
- un moyen de comparaison du niveau de remplissage avec une valeur limite prédéterminée et
- un moyen de vidange du moyen de stockage lorsque le niveau de remplissage est supérieur à la valeur limite prédéterminée.

Les buts, avantages et caractéristiques particulières du dispositif objet de la présente invention étant similaires à ceux du procédé objet de la présente invention, ils ne sont pas rappelés ici.

### BRÈVE DESCRIPTION DES FIGURES

D'autres avantages, buts et caractéristiques particulières de l'invention ressortiront de la description non limitative qui suit d'au moins un mode de réalisation particulier du dispositif et du procédé objets de la présente invention, en regard des dessins annexés, dans lesquels :
- La figure 1 représente, schématiquement et sous forme d'un logigramme, une succession d'étapes particulière du procédé objet de la présente invention et
- La figure 2 représente, schématiquement, un premier mode de réalisation particulier du dispositif objet de la présente invention.

### DESCRIPTION DES MODES DE RÉALISATION

La présente description est donnée à titre non limitatif, chaque caractéristique d'un mode de réalisation pouvant être combinée à toute autre caractéristique de tout autre mode de réalisation de manière avantageuse.

L'expression "et/ou", telle qu'elle est utilisée dans le présent document et dans les revendications, doit être comprise comme signifiant "l'un ou l'autre ou les deux" des éléments ainsi conjoints, c'est-à-dire des éléments qui sont présents de manière conjonctive dans certains cas et de manière disjonctive dans d'autres cas. Les éléments multiples énumérés avec "et/ou" doivent être interprétés de la même manière, c'est-à-dire "un ou plusieurs" des éléments ainsi conjoints. D'autres éléments peuvent éventuellement être présents, autres que les éléments spécifiquement identifiés par la clause "et/ou", qu'ils soient liés ou non à ces éléments spécifiquement identifiés. Ainsi, à titre d'exemple non limitatif, une référence à "A et/ou B", lorsqu'elle est utilisée conjointement avec un langage ouvert tel que "comprenant" peut se référer, dans un mode de réalisation, à A seulement (incluant éventuellement des éléments autres que B) ; dans un autre mode de réalisation, à B seulement (incluant éventuellement des éléments autres que A) ; dans un autre mode de réalisation encore, à A et B (incluant éventuellement d'autres éléments) ; etc.

Tel qu'utilisé ici dans la description et dans les revendications, "ou" doit être compris comme ayant la même signification que "et/ou" tel que défini ci-dessus. Par exemple, lorsqu'on sépare des éléments dans une liste, "ou" ou "et/ou" doit être interprété comme étant inclusif, c'est-à-dire l'inclusion d'au moins un, mais aussi de plus d'un, d'un nombre ou d'une liste d'éléments, et, facultativement, d'éléments supplémentaires non listés. Seuls les termes indiquant clairement le contraire, tels que "un seul des" ou "exactement un des", ou, lorsqu'ils sont utilisés dans les revendications, "consistant en", font référence à l'inclusion d'un seul élément d'un nombre ou d'une liste d'éléments.

Telle qu'elle est utilisée dans la présente description et dans les revendications, l'expression "au moins un", en référence à une liste d'un ou de plusieurs éléments, doit être comprise comme signifiant au moins un élément choisi parmi un ou plusieurs éléments de la liste d'éléments, mais n'incluant pas nécessairement au moins un de chaque élément spécifiquement énuméré dans la liste d'éléments et n'excluant pas toute combinaison d'éléments dans la liste d'éléments. Cette définition permet également la présence facultative d'éléments autres que les éléments spécifiquement identifiés dans la liste des éléments auxquels l'expression "au moins un" fait référence, qu'ils soient liés ou non à ces éléments spécifiquement identifiés. Ainsi, à titre d'exemple non limitatif, "au moins l'un de A et B" (ou, de manière équivalente, "au moins l'un de A ou B", ou, de manière équivalente, "au moins l'un de A et/ou B") peut se référer, dans un mode de réalisation, à au moins un, incluant éventuellement plus d'un, A, sans B présent (et incluant éventuellement des éléments autres que B) ; dans un autre mode de réalisation, à au moins un, comprenant éventuellement plus d'un, B, sans A présent (et comprenant éventuellement des éléments autres que A) ; dans encore un autre mode de réalisation, à au moins un, comprenant éventuellement plus d'un, A, et au moins un, comprenant éventuellement plus d'un, B (et comprenant éventuellement d'autres éléments) ; etc.

Dans les revendications, ainsi que dans la description ci-dessous, toutes les expressions transitoires telles que "comprenant", "incluant", "portant", "ayant", "contenant", "impliquant", "tenant", "composé de", et autres, doivent être comprises comme étant ouvertes, c'est-à-dire comme signifiant incluant, mais non limité à. Seules les expressions transitoires "consistant en" et "consistant essentiellement en" doivent être comprises comme des expressions transitoires fermées ou semi-fermées, respectivement.

On note dès à présent que les figures ne sont pas à l'échelle.

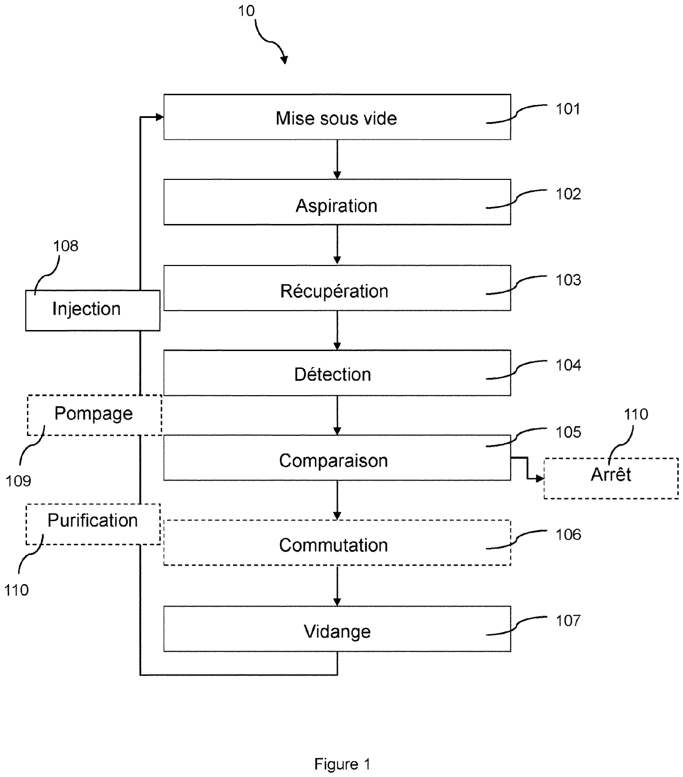

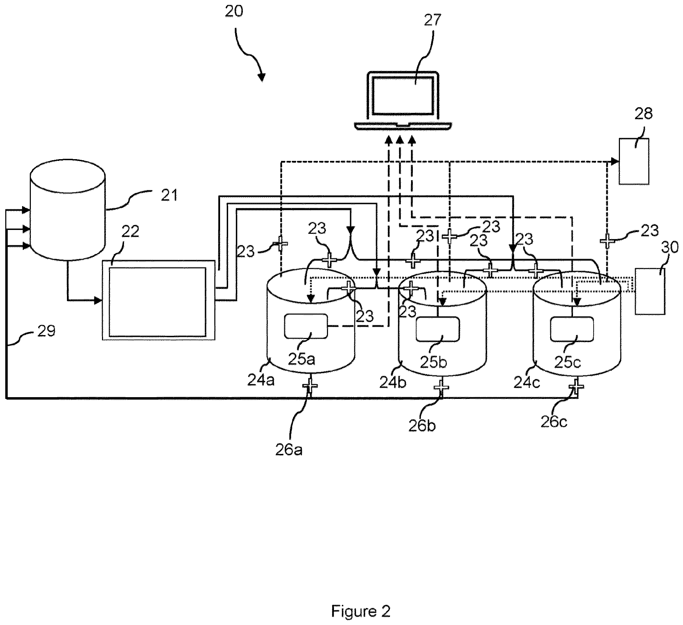

On observe, sur la figure 1, une vue schématique d'un mode de réalisation du procédé 10 objet de la présente invention. Le procédé 10 est décrit en correspondance avec le mode de réalisation du dispositif 20 représenté en figure 2 et qui n'est pas à l'échelle.

Le procédé 10 de moulage par infusion de résine comporte :
- une étape de mise sous vide 101 d'au moins une partie d'un moule 22,
- une étape d'aspiration 102 de la résine depuis un réservoir 21 et de circulation de la résine dans ladite partie du moule 22, sous l'effet du vide,
- une étape de récupération 103 de la résine dans un moyen de stockage, 24a, 24b et/ou 24c,
- une étape de détection 104 d'un niveau de remplissage dans le moyen de stockage 24a, 24b et/ou 24c,
- une étape de comparaison 105 du niveau de remplissage avec une valeur limite prédéterminée et
- une étape de vidange 107 du moyen de stockage, 24a, 24b et/ou 24c lorsque le niveau de remplissage est supérieur à la valeur limite prédéterminée.

Avant le démarrage du procédé 10 d'infusion, un réservoir 21 est rempli de résine. Le réservoir est connecté à un moule 22 au moyen d'au moins un tuyau de répartition de résine. Préférentiellement, le moule 22 est parcouru, en alternance par un tuyau de répartition de résine et un tuyau d'aspiration d'air. Les tuyaux d'aspiration d'air sont connectés à au moins un moyen de stockage, 24a, 24b ou 24c. Une pompe à vide 28 est connectée au moyen de stockage 24a, 24b ou 24c et aspire l'air du moule au travers des tuyaux d'aspiration et du moyen de stockage, 24a, 24b et/ou 24c. Les tuyaux sont agencés de sorte que la résine traverse le moule lors de l'étape d'aspiration 102. Les tuyaux sont fixés de manière étanche au moule 22, au moyen de stockage 24a, 24b ou 24c et au réservoir 21. Les tuyaux du moule sont, par exemple, des gaines spiralées munies d'orifices de dispersion de résine.

Lors de l'étape de mise sous vide 101, la pompe à vide 28 est activée. Une fois la dépression suffisante dans les tuyaux et le moule 22, l'étape d'aspiration 102 et de circulation de la résine est automatique. Cette étape peut également être réalisée manuellement.

Au moins un moyen de stockage dit « réservoir tampon », 24a, 24b ou 24c est placé entre le moule 22 et la pompe à vide 28. Préférentiellement, chaque tuyau d'aspiration de résine est connecté à deux réservoirs tampon, 24a, 24b ou 24c.

Dans le mode de réalisation représente en figure 2, trois réservoirs tampons, 24a, 24b et 24c sont montés en parallèle entre le moule 22 et la pompe à vide 28. Lors de l'étape d'aspiration 102, la résine est aspirée dans au moins un réservoir tampon, 24a, 24b et/ou 24c, après avoir traversé le moule et avant d'atteindre la pompe à vide.

Préférentiellement, chaque réservoir tampon, 24a, 24b et 24c, est étanche.

Pour réaliser l'étape de détection 104, chaque réservoir tampon, 24a, 24b et 24c, comporte un détecteur d'un niveau de remplissage, 25a, 25b et 25c respectivement, dans le réservoir tampon, 24a, 24b et 24c. Chaque détecteur du niveau de remplissage, 25a, 25b ou 25c, peut être un flotteur monté sur un levier qui actionne un bouton-poussoir lorsque le niveau de remplissage atteint une valeur limite prédéterminée. Le bouton-poussoir peut alors être considéré comme un moyen de comparaison du niveau de remplissage avec une valeur limite prédéterminée qui réalise alors l'étape de comparaison 105.

Dans des modes de réalisation, le détecteur du niveau de remplissage est un capteur de niveau de résine et/ou un capteur de la masse du réservoir tampon, 24a, 24b ou 24c qui envoie un signal numérique représentatif du niveau et/ou de la masse captés. Lorsque l'étape de détection 104 du niveau de remplissage est effectuée par mesure de la masse du réservoir tampon, la valeur limite prédéterminée étant une valeur représentative d'une masse.

Le signal numérique est interprété par un moyen de commande 27 mettant en oeuvre un programme informatique de comparaison avec une valeur limite prédéterminée. Dans des modes de réalisation, le moyen de commande est un microprocesseur 27 qui comporte une interface homme-machine par laquelle la valeur limite prédéterminée peut être configurée. Préférentiellement, le microprocesseur 27 fait partie d'un ordinateur qui comporte au moins un clavier, un écran et une mémoire informatique. Des informations concernant les cycles de mise en oeuvre du procédé 10 peuvent être analysées et stockées dans la mémoire informatique.

Lorsque le niveau de remplissage est supérieur à la valeur limite prédéterminée, le microprocesseur 27 envoie une commande de vidange à une vanne, 26a, 26b ou 26c respectivement située en partie base de chaque réservoir tampon, 24a, 24b ou 24c. La résine stockée dans le réservoir tampon, 24a, 24b ou 24c, s'écoule alors par gravité ou par expulsion sous pression. L'étape de vidange 107 du moyen de stockage, 24a, 24b et/ou 24c est alors réalisée.

Dans le mode de réalisation représenté en figure 2, une canalisation 29 est connectée à chaque vanne, 26a, 26b et 26c, pour transporter la résine vidangée vers le réservoir 21. La canalisation 29 réalise alors l'étape de retour 108.

La canalisation 29 peut être munie d'une pompe et/ou de tout moyen de connu de l'homme du métier pour améliorer la pureté de la résine. L'étape de pompage 109 de la résine vidangée vers le réservoir est donc réalisée par la pompe. Dans des modes de réalisation, l'étape de pompage peut être réalisée par mise sous pression de la résine contenue dans le réservoir tampon, 24a, 24b ou 24c, à vidanger. La résine est alors évacuée du réservoir tampon, 24a, 24b ou 24c, sous l'effet de la surpression. La mise sous pression peut être effectuée une autre pompe 30 connectée aux réservoirs tampon, 24a, 24b ou 24c.

L'étape de purification 110 peut être réalisée par un tamis visant à enlever des impuretés ou des grumeaux de la résine.

Dans des modes de réalisation optionnels, un commutateur 23 est placé entre le moule 22 et chaque réservoir tampon 24a, 24b et 24c. Le commutateur 23 peut être commandé par un moyen de commande 27 pour commuter d'un réservoir tampon, 24a, 24b ou 24c, à un autre. Préférentiellement, un seul réservoir tampon, 24a, 24b ou 24c, est vidangé à la fois, les réservoirs tampon, 24a, 24b ou 24c, étant montés en parallèle.

Préférentiellement, le commutateur 23 est un ensemble de vannes, à commande manuelle ou électrique, situées sur chaque tuyau reliant un réservoir tampon, 24a, 24b ou 24c, à la pompe à vide 28 et sur chaque tuyau reliant un réservoir tampon, 24a, 24b ou 24c, au moule 22.

Le commutateur 23 est préférentiellement activé par le moyen de commande 27 lorsque l'un des réservoirs tampons, 24a, 24b ou 24c est rempli. Le commutateur 23 dirige alors le flux de résine aspiré vers un autre réservoir tampon, 24a, 24b ou 24c. Ainsi, l'un des réservoirs est vidangé pendant qu'un autre est rempli ce qui permet d'améliorer l'efficacité du procédé 10 et du dispositif 20. Par exemple, le commutateur 23 peut comporter une vanne commandée électroniquement dirigeant le flux de résine alternativement vers un réservoir tampon, 24a, 24b ou 24c, parmi les trois réservoirs tampons, 24a, 24b ou 24c.

Dans des modes de réalisation dans lesquels l'étape de détection 104 est effectuée par mesure de la masse de chaque réservoir, l'étape de commutation 106 est effectuée proportionnellement à la masse détectée dans le premier moyen de stockage.

Par exemple, une deuxième masse limite prédéterminée, inférieure à la masse limite prédéterminée correspondant à la commande de la vidange du réservoir tampon, 24a, 24b ou 24c, est programmée dans le moyen de commande 27. À partir de la deuxième masse limite prédéterminée, le réservoir tampon, 24a, 24b ou 24c, préalablement en cours de remplissage est rempli par un débit de moins en moins important jusqu'à ce que sa masse atteigne masse limite prédéterminée correspondant à la commande de la vidange. Un autre réservoir tampon, 24a, 24b ou 24c, peut être rempli avec un débit de plus en plus important simultanément. La commande du débit de remplissage peut être effectuée par le moyen de commande 27 et chaque vanne commandée électroniquement du moyen de commutation 23.

En d'autres termes, un premier réservoir tampon, 24a, 24b ou 24c, commence à être rempli. Lorsque sa masse atteint la deuxième masse limite prédéterminée, le débit de remplissage est progressivement réduit. Simultanément, un deuxième réservoir tampon, 24a, 24b ou 24c, commence à être rempli avec une valeur de débit telle que le débit de remplissage total est inchangé, quel que soit le nombre de réservoirs tampons, 24a, 24b ou 24c en cours de remplissage.

Préférentiellement, le débit de remplissage du premier réservoir tampon, 24a, 24b ou 24c, est inversement proportionnel à la masse dudit réservoir tampon, 24a, 24b ou 24c, une fois la deuxième masse limite dépassée.

Préférentiellement, dans les modes de réalisations dans lesquels chaque tuyau issu du moule 22 est relié à au moins deux réservoirs tampon, 24a, 24b ou 24c, pour effectuer l'étape de vidange 107 de l'un desdits réservoirs tampon, 24a, 24b ou 24c, les vannes 23 reliées au réservoir qui va être vidangé sont fermées, puis la vanne, 26a, 26b ou 26c respectivement est ouverte et une surpression est effectuée grâce à la pompe 30 pour éjecter la résine du réservoir.

On note, qu'en fonction du moule et de la pièce à mouler, même si tous les réservoirs sont remplis simultanément, le débit de remplissage peut varier d'un réservoir à l'autre.

Préférentiellement, si chaque tuyau issu du moule 22 est relié à deux réservoirs tampon, 24a, 24b ou 24c, simultanément, on vidange un seul des deux réservoirs tampon, 24a, 24b ou 24c à la fois.

Dans des modes de réalisation, pour former une pièce moulée par infusion, plusieurs étapes de vidange 107 de différents réservoirs peuvent avoir lieu. La première étape de vidange, de la réalisation d'une pièce, est déclenchée lorsque le niveau de remplissage dépasse une première valeur limite prédéterminée. Puis, une fois la vidange du réservoir tampon dans lequel le niveau de remplissage a dépassé la première valeur limite prédéterminée, le prochain réservoir tampon à être vidangé est le plus remplie parmi les autres réservoirs tampon.

En d'autres termes, le procédé 10 comporte une étape de comparaison du niveau de remplissage de chaque réservoir tampon, 24a, 24b ou 24c, chaque autre étape de vidange 107 étant appliqués au réservoir dont le niveau de remplissage est le plus élevé.

Dans des modes de réalisation, le procédé 10 comporte une étape de commande d'une étape de vidange 107 d'au moins un moyen de stockage, 24a, 24b ou 24c en fonction d'au moins une règle de priorité.

La règle de priorité peut être celle définie ci-dessus : le réservoir tampon de niveau le plus élevé, 24a, 24b ou 24c, est vidangé en premier. Optionnellement, la règle de priorité dépend d'un débit de remplissage de chaque réservoir tampon, 24a, 24b ou 24c. Optionnellement, la règle de priorité dépend d'une valeur limite prédéterminée critique, supérieure à la valeur limite prédéterminée. Optionnellement, la règle de priorité dépend d'une propriété physique de la résine utilisée telle que sa viscosité ou son temps de polymérisation.

Préférentiellement, le procédé 10 comporte, de plus, une étape d'arrêt d'urgence 110 lorsque le niveau de remplissage est supérieur à la valeur limite prédéterminée pour chaque moyen de stockage. Ainsi, lorsque pour chaque réservoir tampon, le niveau de remplissage détecté est égal à la valeur limite prédéterminée, ce qui représente un blocage de la vidange sur chacun des réservoirs tampon, la pompe à vide 28 est arrêtée pour éviter d'endommager la pompe à vide 28.

Dans des modes de réalisation (non représentés), chaque réservoir tampon, 24a, 24b ou 24c est relié à un moyen nettoyage d'au moins une partie du réservoir tampon, 24a, 24b ou 24c. Par exemple, une buse d'injection peut être reliée au moyen de nettoyage. Préférentiellement, une étape de nettoyage est mise en oeuvre après chaque vidange pour le réservoir tampon, 24a, 24b ou 24c vidangé. Le moyen de nettoyage est, par exemple, un réservoir d'acétone reliée au réservoir tampon, 24a, 24b ou 24c, par un tuyau et une pompe de l'acétone vers le réservoir tampon, 24a, 24b ou 24c.

Préférentiellement, les moyens du dispositif 20 sont configurés pour mettre en oeuvre les étapes du procédé 10 et leurs modes de réalisation tels qu'exposés ci-dessus et le procédé 10 ainsi que ses différents modes de réalisation peuvent être mis en oeuvre par les moyens du dispositif 20.

## Revendications

1. Procédé (10) de moulage par infusion de résine, **caractérisé en ce qu'**il comporte :
- une étape de mise sous vide (101) d'au moins une partie d'un moule,
- une étape d'aspiration (102) de la résine depuis un réservoir et de circulation de la résine dans ladite partie du moule, sous l'effet du vide,
- une étape de récupération (103) de la résine dans un moyen de stockage,
- une étape de détection (104) d'un niveau de remplissage dans le moyen de stockage,
- une étape de comparaison (105) du niveau de remplissage avec une valeur limite prédéterminée et
- une étape de vidange (107) du moyen de stockage lorsque le niveau de remplissage est supérieur à la valeur limite prédéterminée.

2. Procédé (10) selon la revendication 1, dans lequel l'étape de vidange comporte une étape de retour (108) de la résine vidangée dans le réservoir.

3. Procédé (10) selon la revendication 2, dans lequel l'étape de retour comporte une étape de pompage (109) de la résine vidangée vers le réservoir.

4. Procédé (10) selon l'une des revendications 1 à 3, qui comporte, de plus, avant l'étape de vidange (107), une étape de commutation (106), lorsque le niveau de remplissage est supérieur à la valeur limite prédéterminée, d'un premier moyen de stockage avec un deuxième moyen de stockage, monté en parallèle, pour réaliser les étapes de récupération et vidange (107).

5. Procédé (10) selon la revendication 4, qui comporte, de plus, une fois une première étape de vidange (107) effectuée, au moins une deuxième étape de vidange (107) du moyen de stockage dont le niveau de remplissage est le plus élevé.

6. Procédé (10) selon l'une des revendications 4 ou 5, qui comporte une étape de commande d'une étape de vidange (107) d'au moins un moyen de stockage en fonction d'au moins une règle de priorité.

7. Procédé (10) selon l'une des revendications 4 à 6, dans lequel l'étape de vidange est mise en oeuvre pour un seul moyen de stockage à la fois.

8. Procédé (10) selon l'une des revendications 1 à7, dans lequel l'étape de détection du niveau de remplissage est effectuée par mesure de la masse du moyen de stockage, la valeur limite prédéterminée étant une valeur représentative d'une masse.

9. Procédé (10) selon la revendication 8 lorsqu'elle dépend de l'une des revendications 4 à 7, dans lequel l'étape de commutation (106) est effectuée proportionnellement à la masse détectée dans le premier moyen de stockage.

10. Dispositif (20) de moulage par infusion de résine, **caractérisé en ce qu'**il comporte :
- un moyen de mise sous vide (28) d'au moins une partie d'un moule (22),
- un réservoir de résine (21) ,
- un moyen d'aspiration (23) de la résine depuis le réservoir et de circulation de la résine dans ladite partie du moule, sous l'effet du vide,
- un moyen de stockage (24a, 24b, 24c) de récupération de la résine,
- un moyen de détection (25a, 25b, 25c) d'un niveau de remplissage dans le moyen de stockage,
- un moyen de comparaison (27) du niveau de remplissage avec une valeur limite prédéterminée et
- un moyen de vidange (26a, 26, 26c) du moyen de stockage lorsque le niveau de remplissage est supérieur à la valeur limite prédéterminée.
